Europäisches Patentamt

European Patent Office

Office européen des brevets

(19)

(11) Veröffentlichungsnummer : **0 013 574**
**B1**

(12) **EUROPÄISCHE PATENTSCHRIFT**

(45) Veröffentlichungstag der Patentschrift :
30.09.81

(51) Int. Cl.³ : **C 03 B 7/22**

(21) Anmeldenummer : **80100136.3**

(22) Anmeldetag : **11.01.80**

(54) **Glasschöpfvorrichtung.**

(30) Priorität : **15.01.79 DE 2901323**

(43) Veröffentlichungstag der Anmeldung :
**23.07.80 (Patentblatt 80/15)**

(45) Bekanntmachung des Hinweises auf die Patenterteilung : **30.09.81 Patentblatt 81/39**

(84) Benannte Vertragsstaaten :
**AT CH FR GB IT SE**

(56) Entgegenhaltungen :
**DE - A - 2 031 054**
**DE - C2 - 2 416 376**
**FR - A - 2 070 014**

(73) Patentinhaber : **Bleikristallwerke F.X. Nachtmann KG.**
**Zacharias-Frank-Strasse 7**
**D-8482 Neustadt/Waldnaab (DE)**

(72) Erfinder : **Frank, Walter**
**Bildstrasse 10**
**D-8482 Neustadt/Waldnaab (DE)**

(74) Vertreter : **Weickmann, Heinrich, Dipl.-Ing Patentan-**
**wälte Dipl.Ing.H.Weickmann et al**
**Dipl.Phys.Dr.K.Fincke Dipl.Ing.F.A.Weickmann**
**Dipl.Chem.B.Huber, Dr.-Ing.H.Liska Möhlstrasse 22**
**D-8000 München 86 (DE)**

Imprimerie Jouve, 17, rue du Louvre, 75001 Paris, France

Glasschöpfvorrichtung

Die Erfindung betrifft eine Glasschöpfvorrichtung, deren Schöpfstange an einem zwischen einer Glasaufnahmeposition und einer Glasabgabeposition längs einer im wesentlichen horizontalen Führung verschiebbaren Schlitten um die Stangenachse drehbar und um eine im wesentlichen horizontale Achse schwenkbar gelagert ist, wobei ein erster Antrieb den Schlitten längs der Führung verschiebt, ein zweiter Antrieb die Schöpfstange um die horizontale Achse schwenkt, ein dritter Antrieb die Schöpfstange um ihre Achse dreht und eine Steuerung die Antriebsbewegungen koordiniert.

Aus der DE-OS 20 31 054 sowie der DE-PS 24 16 376 sind Glasschöpfvorrichtungen der vorstehenden Art bekannt, mit deren Hilfe geschmolzenes Glas aus einem Glasschmelzofen geschöpft und einer Verarbeitungsstation, beispielsweise einer Stielpresse oder Blasmaschine zugeführt werden kann. Bei diesen Glasschöpfvorrichtungen wird der die Schöpfstange tragende Schlitten von einem Hydraulikzylinder bewegt, während für die Schwenkbewegung der Schöpfstange ein Kurvenflächenantrieb vorgesehen ist, der die Schöpfstange anhebt bzw. senkt. Mit den bekannten Vorrichtungen lässt sich jeweils lediglich eine einzige Verarbeitungsstation beschicken. Die Qualität der geschöpften Glasschmelze hängt von einer Vielzahl Parameter ab. Derartige Parameter sind beispielsweise der Neigungswinkel der Schöpfstange beim Eintauchen in die Glasschmelze und beim Abtropfen des geschöpften Glases. Von besonderer Bedeutung hat sich das Einhalten einer vorgegebenen Beschleunigung zu Beginn und am Ende der Schöpfstangenbewegung erwiesen. Die Beschleunigung, die das Schöpfstangenende beim Anfahren und Abbremsen erfährt, beeinflußt die Verteilung der geschöpften Glasschmelze auf der am Schöpfende der Schöpfstange angebrachten Kugel.

Bei den bekannten Glasschöpfvorrichtungen ist die Beschleunigung des Schöpfendes der Schöpfstange fest vorgegeben und läßt sich, wenn überhaupt, nur mit relativ großem Aufwand durch Auswechseln der Kurvenflächen ändern. Darüberhinaus läßt sich die Geschwindigkeit, mit der die Schöpfstange in die Glasschmelze eintaucht, nicht unabhängig von der Eintauchrichtung ändern. Damit kann es passieren, daß die Schöpfstange beim Eintauchen Luftblasen in die Schmelze einträgt, wodurch die Glasqualität vermindert wird.

Aufgabe der Erfindung ist es, eine Glasschöpfvorrichtung anzugeben, bei welcher sowohl die Geschwindigkeit als auch die Beschleunigung des Schöpfendes der Schöpfstange bei beliebig wählbarer Bewegungsrichtung des Schöpfendes frei gewählt werden kann.

Ausgehend von der eingangs näher erläuterten Glasschöpfvorrichtung wird diese Aufgabe erfindungsgemäß dadurch gelöst, daß zumindest der erste und der zweite Antrieb durch einen Elektromotor gebildet ist, daß den Elektromotoren voneinander unabhängig einstellbare Drehzahlsollwertgeber zugeordnet sind, die für aufeinanderfolgende Inkremente der Positionen des von den Elektromotoren angetriebenen Schlittens bzw. der Schöpfstange den einzelnen Inkrementen jeweils zugeordnete Solldrehzahlen der Elektromotore vorgeben und daß die Steuerung die Position des Schlittens und der Schöpfstange erfaßt und die Drehzahlsollwertgeber auf die den Inkrementen der erfaßten Positionen zugeordneten Solldrehzahlen einstellt.

Wesentlicher Vorteil der Erfindung ist die hohe Arbeitsgeschwindigkeit, die aufgrund der gesteuerten Beschleunigung der Schöpfstangenbewegung erreicht werden kann. Diese hohe Arbeitsgeschwindigkeit erlaubt es insbesondere, mit einer einzigen Schöpfstange mehrere Arbeitsstationen abwechselnd nacheinander zu beschicken. Mit einer einzigen Schöpfstange kann auf diese Weise beispielsweise bei der Kelchglasherstellung sowohl die Stielpresse als auch die den Kelch fertigende Blasmaschine beschickt werden.

Die Sollwertgeber erzeugen mit anderen Worten ein Geschwindigkeitsprofil in Abhängigkeit von der Position des durch den Antrieb bewegten Schlitten bzw. der Schöpfstange. Dies kann einerseits dadurch erfolgen, daß der Drezahlsollwertgeber eine Vielzahl Sollwerte für im Abstand der Inkremente aufeinanderfolgende Positionen speichert und auf Abruf abgibt oder aber die Sollwerte nach Art eines Funktionsgenerators erzeugt. Die Drehzahlsollwertgeber sind vorzugsweise durch einen gemeinsamen Prozeßrechner gebildet, aus dessen Speicher die den einzelnen Positionen zugeordneten Drehzahlsollwerte abgerufen werden, oder der diese Drehzahlsollwerte jeweils nach einem vorgegebenen Programm berechnet. Bei dem Drehzahlsollwertgeber kann es sich aber andererseits auch um einen gegebenenfalls allen Drehzahlsollwertgebern gemeinsamen Funktionsgenerator handeln, der im einfachsten Fall die Position mit einem konstanten Faktor multipliziert. Die Drehzahlsollwerte aufeinanderfolgender Inkremente unterscheiden sich dann um einen konstanten Faktor, was einer konstanten Beschleunigung entspricht.

Bei dem Elektromotor kann es sich um einen in einen Drehzahlregelkreis geschalteten und mit einem Tachometer des Drehzahlregelkreises gekuppelten Gleichstrommotor handeln. Der Drehzahlregelkreis muß in der Lage sein, die Drehzahl innerhalb des Inkrements auf den durch den Drehzahlsollwertgeber vorgegebenen Drehzahlsollwerts einzuregeln.

Vorteilhaft lassen sich auch Schrittmotore verwenden, da sich hier die Position des Schlittens bzw. der Schöpfstange durch Abzählen der von dem Schrittmotor ausgeführten Schritte konstruktiv einfach ermitteln läßt. Die Drehzahl eines solchen Schrittmotors wird durch die Frequenz der den Schrittmotor fortschaltenden Impulse bestimmt und kann leicht verändert werden.

Die horizontale Führung des Schöpfstangenschlittens verläuft bevorzugt oberhalb des Pegels der Glasschmelze im Ofen und zwar so weit oberhalb, daß die Schöpfstange in der Glasabgabeposition unter einem Winkel von höchstens 60°, am besten etwa 30° zur Vertikalen angestellt ist. Auf diese Weise kann das die Kugel am Schöpfende der Schöpfstange ringförmig umgebende Glas besonders gleichmäßig abtropfen.

In einer bevorzugten Ausführungsform ist die Schöpfstange an einem zweiten Schlitten gelagert, der in Richtung ihrer Achse an dem längs der horizontalen Führung verschiebbaren ersten Schlitten von einem vierten Antrieb verschiebbar angebracht ist. Bei diesem vierten Antrieb kann es sich beispielsweise um einen Hydraulik- oder Pneumatikzylinder handeln. In dieser Ausführungsform kann die Schöpfstange beim Schöpfen in Richtung der Stangenachse in die Glasschmelze eingetaucht werden, ohne daß durch die Stange die Schmelze umgerührt und Luftblasen in die Schmelze eingetragen werden. Zusätzlich kann die Steuerung so ausgebildet sein, daß sie den vierten Antrieb in der Glasabgabeposition zusammen mit dem ersten oder dem zweiten Antrieb einschaltet, wobei der Drehzahlsollwertgeber des ersten oder des zweiten Antriebs im Bereich der Glasabgabeposition Solldrehzahlen vorgibt, die zusammen mit der Abtriebsbewegung des vierten Antriebs das Schöpfende der Schöpfstange im wesentlichen vertikal absenkt. Selbst wenn die Schöpfstange aufgrund der räumlichen Verhältnisse in der Glasabgabeposition lediglich flach in diese Position eingefahren werden kann, läßt sich auf diese Weise die Schöpfstange in der Abgabeposition steil anstellen. Das Schöpfende der Schöpfstange kann sehr nahe an die Füllöffnung der Glasverarbeitungsmaschine herangebracht werden. Die vertikal verlaufende Bewegung begünstigt darüberhinaus eine gleichmäßige Tropfenbildung.

Im folgenden soll ein Ausführungsbeispiel der Erfindung anhand von Zeichnungen näher erläutert werden. Es zeigt

Fig. 1 eine schematische Darstellung einer Glasschöpfvorrichtung ;

Fig. 2 eine teilweise geschnittene Draufsicht auf die Glasschöpfvorrichtung nach Fig. 1 mit Einzelheiten der Konstruktion ;

Fig. 3 Diagramme des zeitlichen Verlaufs der Geschwindigkeit und der Beschleunigung eines die Schöpfstange haltenden Schlittens der Vorrichtung nach Fig. 1 und

Fig. 4 ein Blockschaltbild einer Steuerung.

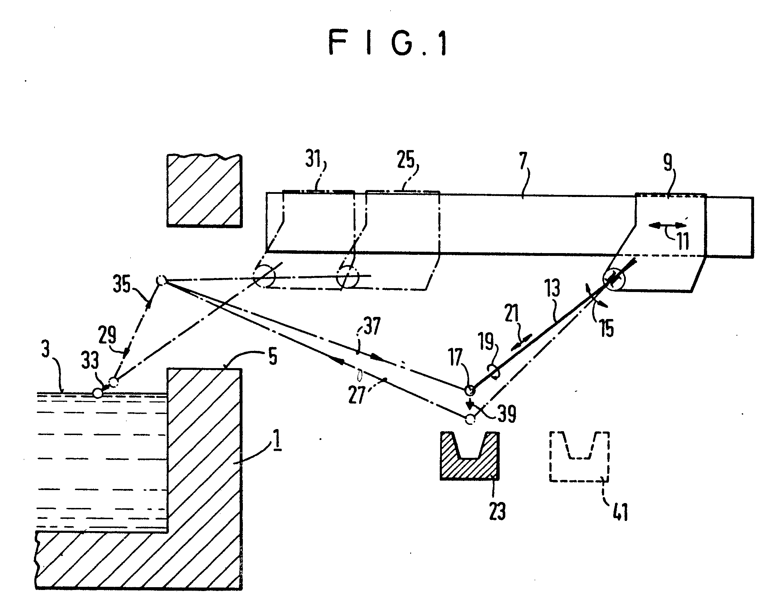

Figur 1 zeigt schematisch einen Glasschmelzofen 1, der bis zu einem Pegel 3 mit Glasschmelze gefüllt ist. Die Glasschmelze ist durch eine Entnahmeöffnung 5 von außen zugänglich. Vor der Entnahmeöffnung 5 ist eine im wesentlichen horizontal verlaufende Führung 7 angeordnet, längs der ein Schlitten 9 in Richtung eines Doppelpfeils 11 verschiebbar ist. An dem Schlitten 9 ist eine Schöpfstange 13 um eine im wesentlichen horizontale, normal zur Führung 7 verlaufende Achse in Richtung eines Doppelpfeils 15 schwenkbar angebracht. Die Schöpfstange 13 trägt an ihrem Schöpfende nach Art eines Kugelspeisers eine Kugel 17 und ist zusätzlich zur Schwenkbewegung in Richtung des Doppelpfeils 15 um die Längsachse der Schöpfstange 13 drehbar an dem Schlitten 9 gelagert. Dies ist in Fig. 1 durch einen Pfeil 19 dargestellt. Die Schöpfstange 13 ist ferner in Richtung eines Doppelpfeils 21, d.h. in Richtung ihrer Längsachse, verschiebbar an dem Schlitten 9 gelagert.

Fig. 1 zeigt mit ausgezogenen Linien den Schlitten 9 in einer Glasabgabeposition, die durch einen Fülltrichter 23, beispielsweise einer Blasmaschine oder einer Stielpresse angedeutet ist. Sie arbeitet wie folgt : Nachdem das Glas von der Kugel 17 in den Fülltrichter 23 abgetropft ist und der Glasstrang mit einer nicht dargestellten Schere od.dgl. abgetrennt wurde, wird die Schöpfstange 13 nach oben geschwenkt. Gleichzeitig fährt der Schlitten 9 längs der Führung 7 aus der Glasabgabeposition in eine Zwischenstellung 25. Der Weg der Kugel 17 ist mit 27 bezeichnet. In der Zwischenposition 25 wird das auf der Kugel 17 der Schöpfstange 13 verbliebene Restglas erwärmt, bevor der Schlitten 9 unter gleichzeitigem Absenken der Schöpfstange 13 (Pfeil 29) in eine mit 31 bezeichnete Glasaufnahmeposition weiterfährt. Die Schöpfstange 13 wird hierbei abgesenkt, bis sich ihre Kugel dicht oberhalb des Pegels 3 der Glasschmelze befindet. Dann wird die Kugel 17 in Richtung der Längsachse der Schöpfstange 13 in die Glasschmelze eingeschoben, wie dies durch einen Pfeil 33 angedeutet ist. Beim Schöpfen wird die Kugel zunächst in Richtung eines Pfeils 35 angehoben, in dem die Schöpfstange 13 nach oben geschwenkt und der Schlitten 9 in die Zwischenposition 25 zurückfährt. In der Zwischenposition 25 wird der aus der Glasschmelze gezogene Faden durch Drehen der Schöpfstange aufgewickelt und angeschmolzen. Dann wird die Kugel 17 längs des Wegs 37 in eine Stellung vertikal oberhalb des Aufnahmetrichters 23 gebracht. Im Verlauf dieser Bewegung wird die Schöpfstange 13 nach unten geschwenkt. Sobald der Schlitten 9 seine Glasabgabeposition erreicht hat, wird er angehalten. Der nach unten gerichteten Schwenkbewegung der Schöpfstange 13 wird eine Vorschubbewegung in Richtung ihrer Längsachse überlagert, so daß sich die Kugel 17 in Richtung eines Pfeils 39 vertikal nach unten absenkt, bis sie ihre Abtropfstellung erreicht hat.

Den Translationsbewegungen der Kugel 17 können, soweit dies erforderlich ist, Drehbewegungen in Richtung des Pfeils 19 überlagert sein. In der Abtropfstellung oberhalb des Fülltrichters 23 ist die Schöpfstange 13 vorzugsweise unter einem Winkel von weniger als 60°, vorzugsweise 30°, zur Vertikalen geneigt. Die Glasschöpfvorrichtung kann aufgrund ihrer hohen Arbeitsgeschwindigkeit mehrere Glasverarbeitungsmaschinen beschicken, die in Richtung der Führung 7 hintereinander angeordnet sind. Eine weitere Glasverarbeitungsmaschine ist in Fig. 1 durch ihrer Fülltrichter 41 schematisch dargestellt.

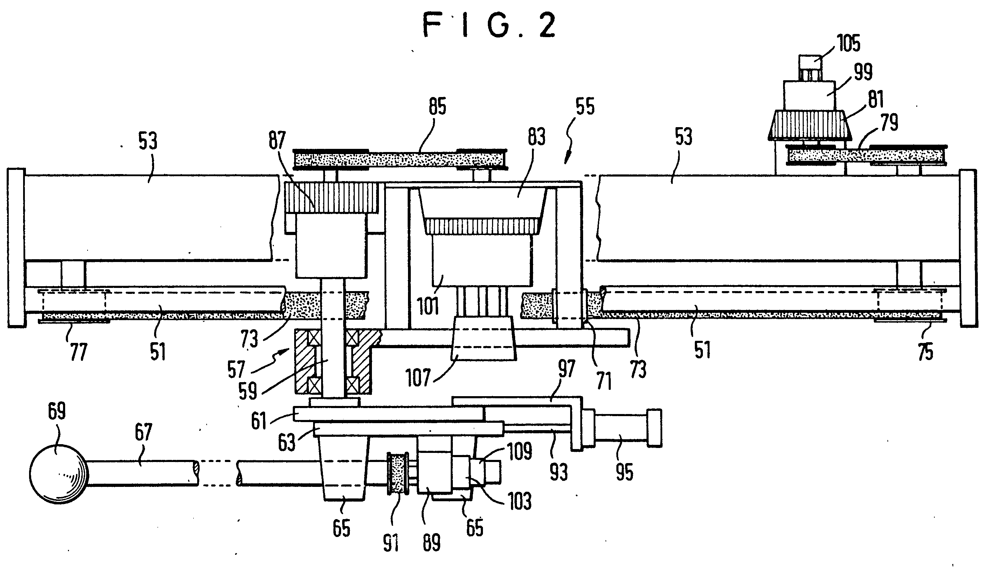

Fig. 2 zeigt Einzelheiten der Glasschöpfvorrichtung. Ein längs Führungsstangen 51 eines Rahmens 53 verschiebbarer Schlitten 55 trägt an einer in einem Lager 57 drehbar gelagerten Welle 59 einen Support 61. An dem Support 61 ist ein weiterer Schlitten 63 gehalten, der in Richtung einer in Böcken 65 drehbar an dem Schlitten 63 gelagerten Schöpfstange 67 normal zur Achse der Welle 59 verschiebbar ist. Die Achse der Welle 59 verläuft etwa horizontal und normal zur Richtung der Führungsstangen 51. Am Schöpfende der Schöpfstange 67 ist eine Kugel 69 angebracht.

Der Schlitten 55 ist bei 71 mit einem Endlosriemen 73 gekuppelt, welcher über zwei im Bereich der Enden der Führungsstangen 51 drehbar an dem Rahmen 53 gelagerte Umlenkräder 75, 77 läuft. Das Umlenkrad 75 wird über einen Riemenantrieb 79 von einem Elektromotor 81 angetrieben, dessen Drehrichtung zur Änderung der Bewegungsrichtung des Schlittens 55 änderbar ist. An dem Schlitten 55 ist ein zweiter Elektromotor 83 angebracht, der über einen Riemenantrieb 85 und ein an dem Schlitten 55 gehaltenes Untersetzungsgetriebe 87 die Welle 59 und damit die Schöpfstange 67 schwenkt. Für die Drehbewegung der Schöpfstange 67 um ihre Längsachse ist ein dritter Elektromotor 89 an dem Schlitten 63 angebracht, der über einen Riemenantrieb 91 mit der Schöpfstange 67 gekuppelt ist. Als Antrieb für die Schiebebewegung des Schlittens 63 relativ zum Support 61 ist ein mit seiner Kolbenstange 93 am Schlitten 63 angreifender, doppelt wirkender Hydraulikzylinder 95 vorgesehen, der an einem vom Support 61 abstehenden Arm 97 angebracht ist.

Zur Steuerung der Elektromotoren 81, 83 und 89 sind diese jeweils mit einem Tachometer 99 bzw. 101 und 103 gekuppelt, der jeweils ein der Drehzahl des Motors proportionales Signal abgibt. Die Elektromotore 81, 83 und 89 sind darüberhinaus jeweils mit einem Positionsgeber 105 bzw. 107 und 109 gekuppelt, der ein der Stellung des von dem Elektromotor jeweils angetriebenen Teils proportionales Signal erzeugt. Das Signal des Positionsgebers 105 repräsentiert die Stellung des Schlittens 55; der Positionsgeber 107 gibt den Schwenkwinkel des Supports 61 an und der Positionsgeber 109 liefert ein der Drehwinkelstellung der Schöpfstange 67 entsprechendes Signal.

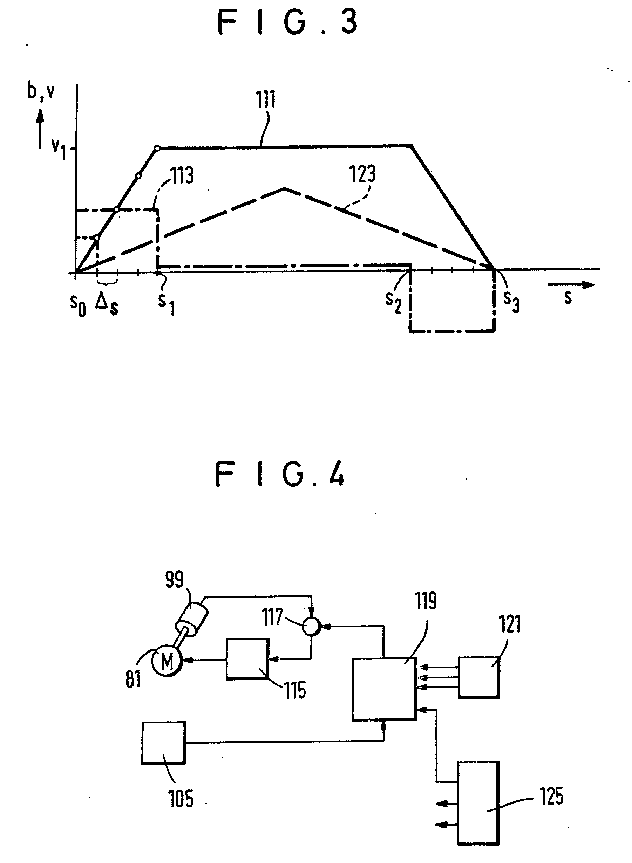

Die Signale der Tachometer 99, 101, 103 sowie der Positionsgeber 105, 107 und 109 erlauben eine geschwindigkeitsabhängige Steuerung der Bewegung des Schlittens 55 sowie der Schwenkbewegung und der Drehbewegung der Schöpfstange 67. Fig. 3 zeigt mit einer ausgezogenen Linie 111 den Verlauf der Geschwindigkeit v des Schlittens 55 längs des mit s bezeichneten Wegs entlang den Führungsstangen 51. Der Schlitten 55 wird vom Stillstand bei einer Koordinate $s_0$ beschleunigt, bis er bei einer Koordinate $s_1$ eine vorgegebene maximale Geschwindigkeit $v_1$ erreicht hat. Zwischen den Koordinaten $s_1$ und $s_2$ wird der Schlitten 55 mit gleichförmiger Geschwindigkeit $v_1$ bewegt und nachfolgend bis zum Stillstand bei $s_3$ abgebremst. Bei der Position $s_0$ kann es sich beispielsweise um die Glasaufnahmeposition 31 aus Fig. 1 handeln, während die Position $s_3$ z.B. der Zwischenposition 25 entspricht. Der Bewegungsablauf des Schlittens 55 wird jedoch bei jeder Lageänderung in der in Fig. 3 dargestellten Weise gesteuert. Fig. 3 zeigt mit einer strichpunktierten Linie 113 die Beschleunigung b des Schlittens 55. Die Beschleunigung ist zwischen den Stellungen $s_0$ und $s_1$ bzw. $s_2$ und $s_3$ konstant, so daß sich die Geschwindigkeit v linear ändert.

Um die Glasschmelze möglichst gleichförmig und unter optimalen Bedingungen schöpfen zu können, muß der Bewegungsablauf des Schlittens 55 und, wie nachstehend noch erläutert wird, der Schwenkbewegung und der Drehbewegung der Schöpfstange 67 sowohl hinsichtlich der Geschwindigkeit als auch hinsichtlich der Beschleunigung gesteuert werden. Fig. 4 zeigt das Blockschaltbild der Steuerung des den Schlitten 55 antreibenden Elektromotors 81. Die Steuerungen der Elektromotoren 83 und 89 können gleichartig aufgebaut sein und sind der Übersichtlichkeit halber weggelassen. Der Motor 81 erhält seine Antriebssignale aus einer Treiberstufe 115, die zusammen mit dem Tachometer 99 und einem Vergleicher 117 einen Drehzahlregelkreis bildet, der die Drehzahl des Motors 81 auf einem von einem Drehzahlsollwertgeber 119 dem Vergleicher 117 zugeführten Drehzahlsollwert hält. Der Drehzahlsollwertgeber 119 erzeugt den Drehzahlsollwert abhängig von der mittels des Positionsgebers 105 ermittelten Position des Schlittens 55. Der Verschiebeweg des Schlittens 55 zwischen den Positionen $s_0$ und $s_3$ ist in Inkremente $\Delta s$ unterteilt, welchen jeweils ein durch den Drehzahlsollwertgeber 119 festgelegter Drehzahlsollwert zugeordnet ist und den der Drehzahlregelkreis innerhalb des Inkrements erreichen muß. Der Drehzahlsollwertgeber 119 kann einen Speicher enthalten, aus dem die Drehzahlsollwerte der vom Positionsgeber 105 bezeichneten Inkremente abgerufen werden; der Drehzahlsollwertgeber 119 kann die Drehzahlsollwerte aber auch nach Art eines Funktionsgenerators aus den Positionssignalen des Positionsgebers 105, beispielsweise durch Multiplikation, erzeugen. Mit 121 ist eine Eingabeschaltung bezeichnet, über die im ersten Fall die den einzelnen Inkrementen zugeordneten Drehzahlsollwerte oder im zweiten Fall die zur Einstellung des Funktionsgenerators erforderlichen Parameterwerte zuführbar sind.

Der Drehzahlsollwertgeber 119 kann insbesondere bei Ausbildung nach Art eines Funktionsgenerators die Position $s_2$ selbsttätig ermitteln. Hierzu muß lediglich beim Beschleunigen zwischen den Positionen $s_0$ und $s_1$ die Zahl der

Inkremente bis zum Erreichen der Geschwindigkeit $v_1$ gezählt werden und der Bremsvorgang um die gleiche Zahl von Inkrementen vor der Position $s_3$ begonnen werden, wenn sich die Drehzahlsollwerte benachbarter Inkremente um eine jeweils gleiche Differenz unterscheiden. Dies ist insbesondere dann vorteilhaft, wenn die maximale Geschwindigkeit $v_1$ nicht erreicht wird. In diesem Fall beginnt der Drehzahlsollwertgeber 119 in der Mitte zwischen den Positionen $s_0$ und $s_3$ selbsttätig mit dem Abbremsen. Dies ist in Fig. 3 durch eine gestrichelte Linie 123 dargestellt.

Zur Koordinierung der dem Motor 81 zugeordneten Schaltung mit den Steuerschaltungen der Motoren 83 und 89 ist eine Programmsteuerung 125 vorgesehen, die die Antriebsbewegungen der Motoren koordiniert. Die Programmsteuerung 125 sowie die Drehzahlsollwertgeber der einzelnen Motoren können gegebenenfalls Bestandteil eines einzigen Prozessrechners sein.

Ein Geschwindigkeitsregelkreis, wie er in Fig. 4 dargestellt ist, erübrigt sich, wenn ein Schrittmotor benutzt wird, dessen Drehzahl durch die Frequenz der dem Schrittmotor zugeführten Fortschaltimpulse bestimmt wird. Solange der Schrittmotor im Schrittbetrieb arbeitet, ist durch die Zahl der ausgeführten Schritte die Position des bewegten Teils eindeutig bestimmt, so daß auch der Positionsgeber entfallen kann. Die Position kann durch Abzählen der Fortschaltimpulse ermittelt werden.

**Ansprüche**

1. Glasschöpfvorrichtung, deren Schöpfstange (13 ; 67) an einem zwischen einer Glasaufnahmeposition und einer Glasabgabeposition längs einer im wesentlichen horizontalen Führung verschiebbaren Schlitten (9 ; 55) um die Stangenachse (13 ; 67) drehbar und um eine im wesentlichen horizontale Achse (59) schwenkbar gelagert ist, wobei ein erster Antrieb (81) den Schlitten (9 ; 55) längs der Führung (7 ; 51) verschiebt, ein zweiter Antrieb (83) die Schöpfstange (13 ; 67) um die horizontale Achse (59) schwenkt, ein dritter Antrieb (89) die Schöpfstange (13 ; 67) um ihre Achse dreht und eine Steuerung (99-125) die Antriebsbewegungen koordiniert, dadurch gekennzeichnet, daß zumindest der erste (81) und der zweite (83) Antrieb durch Elektromotoren gebildet sind, daß den Elektromotoren (81, 83) voneinander unabhängig einstellbare Drehzahlsollwertgeber (119) zugeordnet sind, die für aufeinanderfolgende Inkremente der Positionen des von den Elektromotoren (81, 83) angetriebenen Schlittens (9 ; 55) bzw. der Schöpfstange (13 ; 67) den einzelnen Inkrementen jeweils zugeordnete Solldrehzahlen der Elektromotore (81, 83) vorgeben und daß die Steuerung die Position des Schlittens (9 ; 55) und der Schöpfstange (13 ; 67) erfaßt und die Drehzahlsollwertgeber (119) auf die den Inkrementen der erfaßten Positionen zugeordneten Solldrehzahlen einstellt.

2. Glasschöpfvorrichtung nach Anspruch 1, dadurch gekennzeichnet, daß der Drehzahlsollwertgeber (119) für aufeinanderfolgende Inkremente um einen konstanten Faktor sich unterscheidende Drehzahlsollwerte erzeugt.

3. Glasschöpfvorrichtung nach Anspruch 1, dadurch gekennzeichnet, daß der Elektromotor (81 ; 83) ein in einen Drehzahlregelkreis (99 bzw. 101, 115, 117) geschalteter und mit einem Tachometer (99) des Drehzahlregelkreises (99 bzw. 101, 115, 117) gekuppelter Gleichstrommotor ist.

4. Glasschöpfvorrichtung nach Anspruch 1, dadurch gekennzeichnet, daß der Elektromotor (81 ; 83) ein Schrittmotor ist.

5. Glasschöpfvorrichtung nach Anspruch 1, dadurch gekennzeichnet, daß die horizontale Führung (7 ; 51) oberhalb des Glasschmelzepegels (3) verläuft.

6. Glasschöpfvorrichtung nach Anspruch 5, dadurch gekennzeichnet, daß die Schöpfstange (67) an einem zweiten Schlitten (63) gelagert ist, der in Richtung ihrer Achse an dem längs der horizontalen Führung (51) verschiebbaren ersten Schlitten (55) von einem vierten Antrieb (95) verschiebbar angebracht ist.

7. Glasschöpfvorrichtung nach Anspruch 6, dadurch gekennzeichnet, daß der vierte Antrieb (95) ein Hydraulik- oder Pneumatikzylinder ist.

8. Glasschöpfvorrichtung nach Anspruch 6, dadurch gekennzeichnet, daß die Steuerung den vierten Antrieb (95) in der Glasaufnahmeposition zum Eintauchen des Schöpfendes (17, 69) der Schöpfstange (13 ; 67) in die Glasschmelze einschaltet.

9. Glasschöpfvorrichtung nach Anspruch 6, dadurch gekennzeichnet, daß die Steuerung (99-125) den vierten Antrieb (95) in der Glasabgabeposition zusammen mit dem ersten (81) oder dem zweiten (83) Antrieb einschaltet und daß der Drehzahlsollwertgeber (119) des ersten (81) oder des zweiten (83) Antriebs im Bereich der Glasabgabeposition Solldrehzahlen vorgibt, die zusammen mit der Antriebsbewegung des vierten Antriebs (95) das Schöpfende der Schöpfstange (13 ; 67) im wesentlichen vertikal absenken.

10. Glasschöpfvorrichtung nach Anspruch 5, dadurch gekennzeichnet, daß die Schöpfstange (13 ; 67) im Bereich der Glasabgabeposition um einen Winkel kleiner als etwa 60° vorzugsweise 30° zur Vertikalen nach unten geneigt ist.

11. Glasschöpfvorrichtung nach einem der vorangehenden Ansprüche, dadurch gekennzeichnet, daß sich die horizontale Führung (7 ; 51) über mehrere, hintereinander angeordnete Glasabgabepositionen (23, 41) erstreckt.

**Claims**

1. Glass-scooping device, the scooping rod (13, 67) of which is mounted rotatably about the rod axis (13, 67) and pivotably about a substantially horizontal axis (59) on a sliding carrier (9, 55) displaceable along a substantially horizontal guide between a glass-collecting position and a glass delivery position, where a first drive system (81) displaces the sliding carrier (9, 55) along the guide (7, 51), a second drive system (83) pivots the scooping rod (13, 67) about the horizontal axis (59), a third drive system (89) rotates the scooping rod (13, 67) about its axis and a control system (99-125) co-ordinates the drive movements, characterised in that at least the first drive system (81) and the second (83) are formed by electric motors, in that mutually independently settable rotation speed setting means (119) are allocated to the electric motors (81, 83), which setting means for successive increments of the positions of the sliding carrier (9, 55) driven by the electric motors (81, 83), or of the scooping rod (13, 67), predetermine ideal rotation speeds of the electric motors (81, 83) in each case allocated to the individual increments and in that the control system detects the position of the sliding carrier (9, 55) and of the scooping rod (13, 67) and sets the rotation speed setting means (119) to the ideal rotation speeds allocated to the increments of the detected positions.

2. Glass-scooping device according to Claim 1, characterised in that the rotation speed setting means (119) generates rotation speed ideal values differing by a constant factor for successive increments.

3. Glass-scooping device according to Claim 1, characterised in that the electric motor (81, 83) is a direct-current motor connected into a rotation speed regulating circuit (99 or 101, 115, 117) and coupled with a tachometer (99) of the rotation speed regulating circuit (99 or 101, 115, 117).

4. Glass-scooping device according to Claim 1, characterised in that the electric motor (81, 83) is a stepping motor.

5. Glass-scooping device according to Claim 1, characterised in that the horizontal guide (7, 51) extends above the surface level (3) of the glass melt. .

6. Glass-scooping device according to Claim 5, characterised in that the scooping rod (67) is mounted on a second sliding carrier (63) which is fitted for displacement by a fourth drive system (95) in the direction of its axis on the first sliding carrier (55) which is displaceable along the horizontal guide (51).

7. Glass-scooping device according to Claim 6, characterised in that the fourth drive system (95) is a hydraulic or pneumatic cylinder.

8. Glass-scooping device according to Claim 6, characterised in that the control system switches on the fourth drive system (95) in the glass-collecting position for the dipping of the scooping end (17, 69) of the scooping rod (13, 67) into the glass melt.

9. Glass-scooping device according to Claim 6, characterised in that the control system (99-125) switches on the fourth drive system (95), in the glass delivery position, together with the first drive system (81) or the second (83), and in that the rotation speed setting means (119) of the first drive system (81) or of the second (83) in the region of the glass delivery position predetermines ideal rotation speeds which, together with the drive movement of the fourth drive system (95), lower the scooping end of the scooping rod (13, 67) substantially vertically.

10. Glass-scooping device according to Claim 5, characterised in that the scooping rod (13, 67) in the region of the glass delivery position is inclined downwards by an angle less than about 60°, preferably 30°, to the vertical.

11. Glass-scooping device according to one of the preceding Claims, characterised in that the horizontal guide (7, 51) extends over several glass delivery positions (23, 41) arranged one behind the other.

**Revendications**

1. Dispositif de puisage de verre dont la tige de puisage (13 ; 67) est montée sur un chariot (9, 55), pouvant se déplacer le long d'un guidage sensiblement horizontal entre une position de chargement du verre et une position de déchargement du verre, de façon à pouvoir tourner autour de l'axe de ladite tige (13 ; 67) et à pouvoir pivoter autour d'un axe (59) sensiblement horizontal, un premier mécanisme d'entraînement (81) étant prévu pour déplacer le chariot (9 ; 55) le long du guidage (7 ; 51), un second mécanisme d'entraînement (83) étant prévu pour faire pivoter la tige de puisage (13 ; 67) autour de l'axe horizontal (59), un troisième mécanisme d'entraînement (89) étant prévu pour faire tourner la tige de puisage (13 ; 67) autour de son axe, et un dispositif de commande (99-125) étant prévu pour coordonner les mouvements d'entraînement, caractérisé en ce qu'au moins les premier (81) et second (83) mécanismes d'entraînement sont constitués par des moteurs électriques, en ce qu'aux moteurs électriques (81, 83) sont associés des dispositifs propres à fournir la valeur de consigne de la vitesse (119) qui peuvent être réglés indépendamment l'un de l'autre et qui fournissent les vitesses de consigne des moteurs électriques (81, 83) respectivement associées à des incréments individuels, pour des incréments successifs des positions du chariot (9 ; 55) ou de la tige de puisage (13 ; 67) entraînés par les moteurs électriques (81 ; 83) et en ce que le dispositif de commande détecte la position du chariot (9 ; 55) et de la tige de puisage (13 ; 67) et règle les dispositifs propres à fournir la valeur de consigne de la vitesse (119) sur les vitesses de consigne associées aux incréments des positions détectées.

2. Dispositif de puisage de verre suivant la revendication 1, caractérisé en ce que le dispositif propre à fournir la valeur de consigne de la vitesse (119) délivre, pour des incréments successifs, des valeurs de consigne de vitesse qui diffèrent d'un facteur constant.

3. Dispositif de puisage de verre suivant la revendication 1, caractérisé en ce que le moteur électrique (81 ; 83) est un moteur à courant continu branché dans un circuit de régulation de vitesse (99 ou 101 ; 115 ; 117) et couplé à un tachymètre (99) du circuit de régulation de vitesse (99 ou 101 ; 115 ; 117).

4. Dispositif de puisage de verre suivant la revendication 1, caractérisé en ce que le moteur électrique (81 ; 83) est un moteur pas à pas.

5. Dispositif de puisage de verre suivant la revendication 1, caractérisé en ce que le guidage horizontal (7 ; 51) s'étend au-dessus du niveau (3) de la masse de verre fondu.

6. Dispositif de puisage de verre suivant la revendication 5, caractérisé en ce que la tige de puisage (67) est montée sur un second chariot (63) qui est monté sur le premier chariot (55) propre à se déplacer le long du guidage horizontal (51) de façon à pouvoir être déplacé, suivant la direction de son axe, par un quatrième mécanisme d'entraînement (95).

7. Dispositif de puisage de verre suivant la revendication 6, caractérisé en ce que le quatrième mécanisme d'entraînement (95) est un cylindre hydraulique ou pneumatique.

8. Dispositif de puisage de verre suivant la revendication 6, caractérisé en ce que le dispositif de commande est propre à brancher le quatrième mécanisme d'entraînement (95) dans la position de chargement du verre pour plonger l'extrémité de puisage (17 ; 69) de la tige de puisage (13 ; 67) dans la masse de verre fondu.

9. Dispositif de puisage de verre suivant la revendication 6, caractérisé en ce que le dispositif de commande (99-125) est propre à brancher le quatrième mécanisme d'entraînement (95) dans la position de déchargement du verre en même temps que le premier (81) ou le second (83) mécanisme d'entraînement, et que le dispositif propre à fournir la valeur de consigne (119) du premier (81) ou du second (83) mécanisme d'entraînement est agencé pour donner, dans la région de la position de déchargement du verre, des vitesses de consigne qui, conjointement avec le mouvement d'entraînement du quatrième mécanisme d'entraînement (95), provoquent une descente sensiblement verticale de l'extrémité de puisage de la tige de puisage (13 ; 67).

10. Dispositif de puisage de verre suivant la revendication 5, caractérisé en ce que, dans la région de la position de déchargement de verre, la tige de puisage (13 ; 67) est inclinée vers le bas d'un angle inférieur à environ 60°, de préférence à 30°, par rapport à la verticale.

11. Dispositif de puisage de verre suivant l'une des revendications précédentes, caractérisé en ce que le guidage horizontal (7 ; 51) s'étend au-dessus de plusieurs positions de déchargement du verre (23, 41) disposées les unes derrière les autres.

# FIG.1

# FIG. 2

0 013 574

F I G . 3

F I G . 4